# EUROPEAN PATENT SPECIFICATION

(11) **EP 2 057 750 B1**
(45) Date of publication and mention of the grant of the patent: **11.03.2015**
(21) Application number: 07746649.8
(22) Date of filing: 23.05.2007
(51) Int. Cl.: H04M 1/22, H04B 1/38, G06F 3/02, G06F 1/16, H01H 9/18

(54) **USER INPUT APPARATUS COMPRISING A PLURALITY OF TOUCH SENSORS, AND METHOD OF CONTROLLING DIGITAL DEVICE BY SENSING USER TOUCH FROM THE APPARATUS**
BENUTZEREINGABEVORRICHTUNG MIT MEHREREN BERÜHRUNGSSENSOREN UND VERFAHREN ZUR STEUERUNG EINER DIGITALEN EINRICHTUNG DURCH ERFASSUNG EINER BENUTZERBERÜHRUNG AUS DER VORRICHTUNG
APPAREIL D'ENTRÉE UTILISATEUR COMPRENANT UNE PLURALITÉ DE CAPTEURS TACTILES ET PROCÉDÉ DE COMMANDE D'UN DISPOSITIF NUMÉRIQUE PAR DÉTECTION D'UN CONTACT UTILISATEUR À PARTIR DE CET APPAREIL

(30) Priority: 08.08.2006 KR 20060074781
(43) Date of publication of application: 13.05.2009
(73) Proprietor: Melfas Inc., Seoul 153-801 (KR)
(72) Inventor: MIN, Dong Jin, Seoul 151-772 (KR)
(74) Representative: Merryweather, Colin Henry
(86) International application number: PCT/KR2007/002501
(87) International publication number: WO 2008/018677

(56) References cited:
- EP-A1- 1 523 021
- EP-A2- 1 152 443
- JP-A- 09 247 257
- JP-A- 2005 134 998
- KR-A- 20020 088 116
- KR-A- 20040 028 171
- KR-A- 20050 026 112
- US-A- 4 772 769
- US-A1- 2004 204 014
- US-A1- 2004 268 391
- US-A1- 2005 017 953
- US-B1- 6 725 064
- US-B2- 6 678 534

## Description

The present invention relates to a user input apparatus including a plurality of touch sensors, and more particularly, to an apparatus and method for selectively activating each of the touch sensors according to an operation mode and displaying an activated state to a user.

Recently, due to remarkable development of electronic engineering technology, various types of user input apparatuses are released in the market. Conventionally, a mechanical sensor has been generally used which detects a physical motion arising when a user presses a push button at a certain level of force. Recently, however, a touch sensor is becoming widely used which is capable of sensing a user's touch on a surface thereof even when the force is not applied. The touch sensor has superior mechanical durability and low manufacturing costs. Particularly, the touch sensor is attracting attention in that it is suitable for portable devices having highly-integrated components since a size of the touch sensor is smaller than the mechanical sensor.

In the mechanical sensor, buttons are configured to be protruding, and thereby distinction between the buttons is easy. Conversely, in a normal configuration of the touch sensor, a single panel is provided to form a top cover of plural touch sensors for protecting the sensors or for providing beautiful exterior, and thus distinction between the plural touch sensors may not be easy.

In order to distinguish neighboring touch sensors and to display a function of each touch sensor, a number, a character or a mark displaying the function of each touch sensor is carved or printed on a surface of each touch sensor or on a panel that covers the touch sensors.

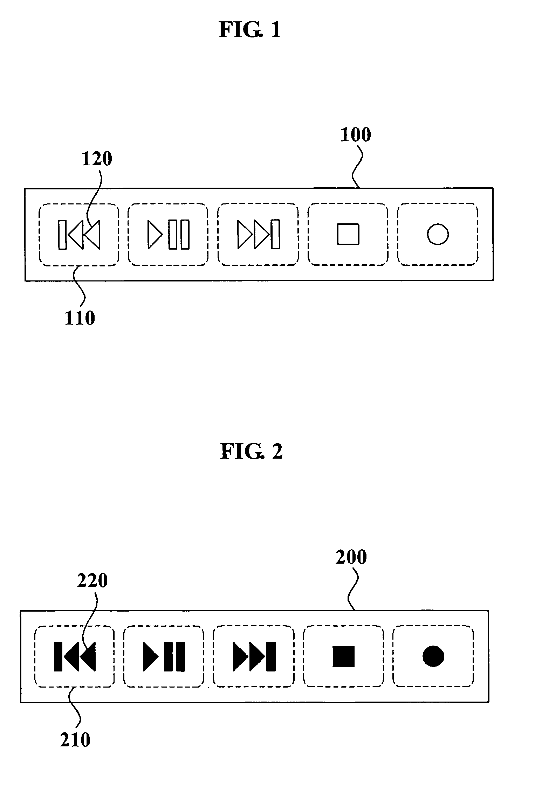

FIG. 1 is a top view illustrating a conventional user input apparatus having a plurality of touch sensors which are located side by side. On the surface of each touch sensor, a mark displaying the function of each sensor is silkscreen-printed.

Specifically, FIG 1 shows a panel 100 and five touch sensors located side by side beneath the panel 100. A mark 120 which is printed on the center of a touch area 110 of each sensor displays a function of each sensor to guide a user with a point to touch.

FIG 2 shows another configuration where a backlighting function is added to the user input apparatus of FIG 1. In this configuration, five touch sensors are located side by side beneath a panel 200, and a mark 220 is printed on the center of a touch area 210 of each sensor, in the like manner as shown in FIG 1. However, in FIG 2, the mark 220 is transparently silkscreen-printed to allow a light to transmit therethrough, and thus the light emitted from a backlight helps to display the mark 220 more clearly than the mark 120.

Particularly, in the user input apparatus in FIG. 2, the backlight is lit only when the touch sensors are activated in input standby mode, more accurately guiding the user when to apply an input. Cases when the touch sensors are activated are as follows: when a cover covering the touch sensors is open, when an application operated when the touch sensors are deactivated ends, or when the user input apparatus is initialized at a power-on.

Currently, the user input apparatus is required to support a complex interface for manipulating digital devices on a plurality of operation modes since the digital devices are acquiring more functions due to development of the information technology. As an example, in a mobile communication terminal having a function of playing music, a part of the plurality of touch sensors may be used for a basic function, such as menu selection or terminal manipulation for telecommunication, while another part of the touch sensors may be used for the music play function.

In this instance, when the digital device is operated in a specific operation mode and when back-lights are simultaneously lightened, including unnecessary touch sensors that may not be used in the specific operation mode, it may cause confusion to the user by giving a message that unused touch sensors are also activated to receive the user's input.

This is more problematic as the functions of the digital devices become complex and various functions are integrated into a single digital device. That is, since the user input apparatus includes more touch sensors to process the various functions, a need for a new intuitive interface is increasing which is capable of visually hiding the touch sensors not in use in a specific operation mode.

Accordingly, in order to solve the above-described problems, a new method, which selectively displays an active/deactivated state of each of the plurality of touch sensors according to an operation mode of digital devices, will be provided in the specification of the present invention.

EP-1,152,443 discloses a user input apparatus for controlling a digital device by sensing a user's touch, comprising: a plurality of touch sensors, each of which detects the user's touch and generates a touch sensing signal; a state control unit determining an active or deactive state for each of the touch sensors according to an operation mode of the digital device; an optical signal generation unit generating an optical signal that displays the active or deactive state of each of the touch sensors; a touch sensing signal receiving unit receiving the touch sensing signal generated from a touch sensor. According to an aspect of the present invention, there is provided a user input apparatus for controlling a digital device by sensing a user's touch, comprising:
a plurality of touch sensors, each of which is arranged to detect a user's touch;
a state control unit arranged to determine an active or deactive state for each of the touch sensors according to an operation mode of the digital device which is determined based on a user's input;
an optical signal generation unit arranged to generate an optical signal that displays the active or deactive state of each of the touch sensors; and
a touch sensing signal receiving unit arranged to receive the touch sensing signals, and
   characterised by a touch sensor driving unit arranged to generate a sensor driving signal that drives the touch sensors that are in the active state, so that when a touch sensor detects a user's touch, a touch sensing signal is generated from the touch sensor if it is in the active state and no touch sensing signal is generated from the touch sensor if it is in the deactive state.

According to another aspect of the present invention, there is provided a method for controlling a digital device using a plurality of touch sensors arranged to detect a user's touch, the method comprising:
detecting a user's touch via a plurality of touch sensors:
   determining an operation mode of the digital device based on a user's input;
   determining an active or deactive state for each of the touch sensors according to the operation mode of the digital device;
   generating an optical signal to display the active or deactive state of each of the touch sensors; and
   receiving touch sensing signals from the touch sensors, and
   characterised by applying a sensor driving signal to those touch sensors that are in the active state and not applying a sensor driving signal to those touch sensors that are in the deactive state.

The hereinafter described embodiments of present invention provide a user input apparatus having an intuitive interface capable of controlling a digital device being operated in various operation modes.

The hereinafter described embodiments of present invention also provide a user input apparatus which can prevent a user's confusion that can occur when the operation mode switches by selectively generating an optical signal for a touch sensor used in a specific operation mode and thus preventing unnecessary user input attempts via a touch sensor not being used in that operation mode.

The hereinafter described embodiments of present invention also provide a user input apparatus which improves user's convenience for manipulation since a touch sensor not in use in a specific operation mode is appropriately hid from a user's view, and minimizes a user's aversion to a complex user interface.

The hereinafter described embodiments of present invention also provide a user input apparatus which includes a plurality of touch sensors, and a plurality of light emitting diodes (LED) selectively emitting a light with respect to a touch sensor in an activated state, where each LED is located beneath each of a plurality of touch sensors.

Hereinafter, a configuration of a user input apparatus and a method of controlling a digital device using received input from the input apparatus according to embodiments of the present invention will be described in detail by referring to the accompanied drawings in which:
FIG. 1 is a top view illustrating a conventional user input apparatus which includes a plurality of touch sensors;
FIG. 2 is a top view illustrating a conventional user input apparatus having a backlight function added;
FIG. 3 is a diagram illustrating a portable device according to an embodiment of the present invention;
FIG. 4 is a diagram illustrating a user input apparatus, in which an activated mode of each touch sensor is selectively displayed, according to an embodiment of the present invention;
FIG. 5 is a block diagram illustrating a user input apparatus, and connections between configuration elements;
FIG. 6 is a block diagram illustrating selective applying of a touch sensor driving signal according to an embodiment of the present invention;
FIG. 7 is a flowchart illustrating a method of controlling a digital device according to an embodiment of the present invention;
FIG. 8 is a flowchart illustrating a method of receiving a user's input according to an embodiment of the present invention.

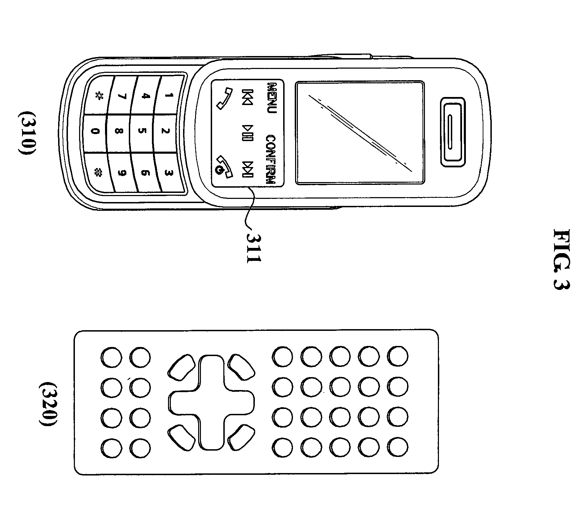

FIG. 3 is a diagram illustrating a portable device having a user input apparatus according to an embodiment of the present invention. The present invention may be applicable to a portable device 310 which is provided with a touch panel 311 having a plurality of touch sensors as illustrated in FIG. 3. As an example of the portable device 310, a mobile communication terminal having a music play function is illustrated in FIG. 3. As described above, touch sensors are adopted for more portable devices due to its advantages in mechanical durability, component integration and costs.

The term "portable device" used throughout this specification denotes a small-sized digital device having portability, and may include mobile communication devices, such as a personal digital cellular (PDC) phone, a personal communication service (PCS) phone, a personal hand phone system (PHS) phone, a code division multiple access (CDMA)-2000 *1X, 3X) phone, a wideband CDMA (WCDMA) phone, a dual band/dual mode phone, a global standard for mobile communications (GSM) phone, a mobile broadband system (MBS) phone, a digital multimedia broadcasting (DMB) terminal, a smart phone, an orthogonal frequency division multiplexing (OFDM) terminal, and an orthogonal frequency division multiple access (OFDMA) terminal.

Further, the term "portable device" used in this specification may also include all types of computing apparatuses of a general or a specific use, such as a personal digital assistant (PDA), a hand-held PC, a notebook computer, a laptop computer, an MP3 player, and an MD player. This means that the term is broadly interpreted as a terminal where a microprocessor capable of performing certain calculations is employed.

Referring back to FIG. 3, the present invention may be applicable to a remote controller 320, which is used to control various types of electronic home appliances. Similar to the portable device, the electronic home appliances are embodying more functions in comparison to the past, and thus the remote controller 320 tends to have more buttons than before. However, since only a part of all buttons are used in a specific operation mode, there is a need to inform a user which buttons are deactivated and not in use upon entering that operation mode. Accordingly, the present invention may also be applicable to a user input apparatus which consists of mechanical buttons such as push buttons.

The term "touch button" used in the specification may indicate various types of sensors such as an electrical sensor, a mechanical sensor, and an optical sensor. The electrical sensor detects a user's touch using changes of electrical characteristics such as capacitance, inductance, and resistance. The mechanical sensor detects a pressure or a physical motion applied on the surface by a user, while the optical sensor detects a user's touch through changes in optical characteristics such as a refractive index and a reflection index.

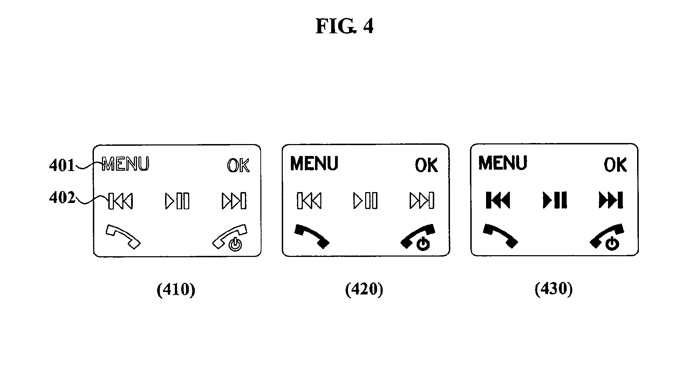

FIG. 4 illustrates a user input apparatus according to an embodiment of the present invention, showing a top view on the touch panel 311 of the portable device 310 of FIG. 3 which is altered according to its operation modes.

The portable device 310 operates in two different modes, i.e., a basic mode and a music play mode. The user input apparatus of FIG. 4 includes a basic touch sensor group 401 having four touch sensors being used in the basic mode and an additional touch sensor group 402 having three touch sensors being additionally used in the music play mode.

Further, the user input apparatus operates in an input blocking mode when it is locked using a hold key, when an application that does not require a user's manipulation is operating, or during an initialization process where a user's input should be blocked.

The view 410 shows the touch panel 311 in an input blocking mode. As illustrated in FIG 4, in the input blocking mode, all sensors are deactivated, and the user input apparatus may not detect a user's touch even when the user touches a surface of the touch sensors.

According to an embodiment of the present invention, in each of the touch sensors, marks and characters are negatively silkscreen-printed to allow a light being emitted from a light emitting member located beneath the touch sensors to transmit through the transparently formed marks and characters. In this instance, the surface, where the marks and characters are transparently printed, may be a surface of the touch sensors, and more generally, may be a surface of the touch panel 311 which covers a top of the touch sensors. The silkscreen-printing is not required to be completely transparent, as long as a certain level of transparency is provided in which a case where a light is being emitted from the light emitting member and a case where the light is not being emitted are distinguishable.

As illustrated in a view 410 of FIG 4, the light emitting member does not emit a light with respect to the entire touch sensors when in the input blocking mode. Through this, a user can recognize that all of the touch sensors are deactivated and the portable device is in a state that does not allow its manipulation.

Also, a view 420 shows that a light is selectively emitted from beneath the basic sensor group 401 in the basic mode, by the light emitting member. In the basic mode, the basic sensor group 401 comprising four buttons of "call", "cancel", "menu" and "ok" for basic functions related to mobile communication and menu manipulation is exclusively activated. Accordingly, the user may recognize that only the touch sensors corresponding to the four buttons are allowed to be manipulated.

The next view 430 shows that a light is emitted also from beneath the additional sensor group 402 as well as the basic sensor group 401 in the music play mode. In this operation mode, buttons for play, pause and search for music are activated as well as the buttons for the basic function. Accordingly, the light emitting member additionally emits a light with respect to touch sensors corresponding to buttons of "rewind", "play or pause" and "fast forward". Accordingly, the user is able to recognize that the portable device 310 is operating in the music play mode, and that the touch sensors included in the additional sensor group 402 as well as those in the basic sensor group 401 are allowed to be manipulated.

As described above, the user input apparatus according to the present invention selectively activates a part of a plurality of touch sensors according to an operation mode of the digital device, and selectively emits a light with respect to touch sensors in an activated state and being capable of sensing a user's touch. In this manner, the user input apparatus transmits information about touch sensors allowed to be manipulated by a user. Accordingly, in order to manipulate the digital device having a plurality of operation modes, the user is not required to remember which buttons or touch sensors can be manipulated in each operation mode. Therefore, user's aversion with respect to a complex user interface can be reduced since the complex user interface can be simplified in each operation mode, and faster manipulation of the user input apparatus can be achieved.

When a plurality of touch sensors are covered on their top using a single panel, and the transparency of a background portion of the touch panel and that of the portion where silkscreen-printed marks are controlled appropriately, touch sensors in a deactivated state may be visually hid from the user's view. Further, by arranging touch sensors manipulated in each operation mode such that they are not located too adjacent to each other, a limited size of the panel can be effectively utilized.

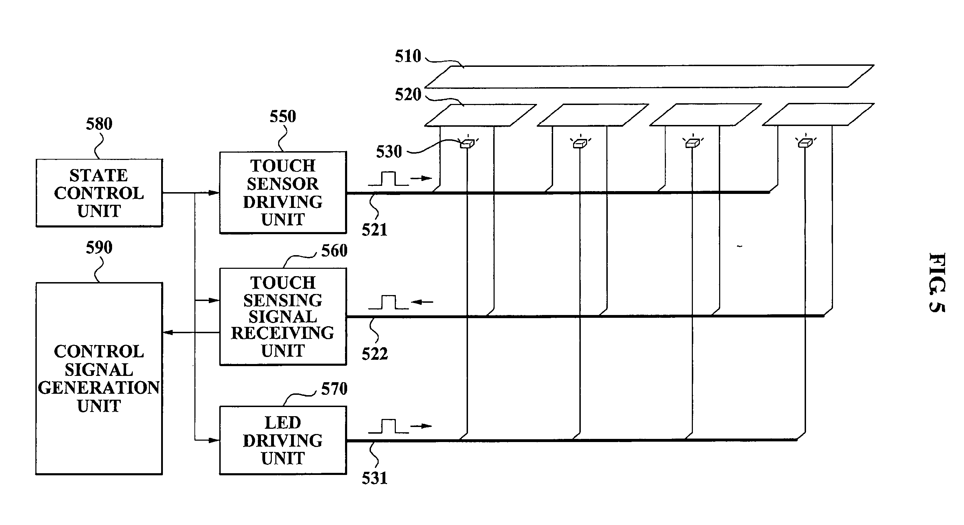

FIG 5 is a block diagram illustrating an internal configuration and connections between the components of the user input apparatus in accordance with an embodiment of the present invention.

Referring to FIG 5, a plurality of touch sensors 520 are arrange beneath a panel 510, and light emitting diodes (LEDs) 530 are located beneath the touch sensors 520. For convenience of description, the touch sensors 520 and LEDs 530 are illustrated to be arranged in a single line in FIG 5. However, the present invention is not limited to such a configuration. As previously illustrated in FIG 4, the touch sensors 520 and LEDs 530 may be arbitrarily arranged depending on a type of digital devices.

Also, while the LEDs 530 located beneath of the touch sensors 520 are taken as an example of the light emitting member emitting a light with respect to each of the touch sensors 520 in FIG 5, the present invention is not limited to this configuration. That is, the light emitting member may be located adjacent to the touch sensors 520 in any direction such as in its top side or back side, or by the side of the touch sensors 520. Further, the light emitting member may be constructed with various types of light sources which selectively emit a light with respect to each of the touch sensors 520, thereby visually distinguishing a specific touch sensor 520 from other touch sensors 520.

In this instance, the expression that the light emitting member is located adjacent to the plurality of touch sensors 520 denotes that it is located within a distance close enough to distinguish a specific touch sensor 520 from other touch sensors 520 when the light emitting member emits the light with respect to that specific touch sensor.

Accordingly, the term "adjacent" may indicate a range defined by an absolute threshold distance, while it can be also interpreted as a range defined by a relative distance from a specific touch sensor 520 with respect to that for other touch sensors 520. As illustrated in FIG 5, in a case that the light emitting member includes the LEDs 530 located beneath each of the touch sensors 520, each LED 530 may be located at a closer distance from a touch sensor 520 associated with that LED 530 than from other touch sensors 520.

A state control unit 580 determines an activated/deactivated state for each of the touch sensors 520 according to an operation mode of the digital device. That is, the state control unit 580 selects which touch sensors 520 to activate and which touch sensors 520 to deactivate according to the operation modes of the digital device.

A selection result of the state control unit 580 is transmitted to a touch sensor driving unit 550, a touch sensing signal receiving unit 560, and an LED driving unit 570.

The LED driving unit 570 transmits a driving signal to each of the LEDs 530 via an LED control bus 531, and the LEDs 530 that receive the driving signal emits a light. In an embodiment of the present invention, the LED driving unit 570 supplies constant current to LEDs 530 located beneath touch sensors 520 that are activated, while not supplying current to LEDs 530 located beneath touch sensors 520 that are deactivated, displaying activated or deactivated state of the each of the touch sensors 520 accordingly.

According to another embodiment of the present invention, the LED driving unit 570 supplies LEDs 530 located beneath touch sensors 520 in an activated state with a specific level of current, and supplies LEDs 530 located beneath touch sensors 520 in a deactivated state with another level of current which is different from said specific level. In this manner, each of the LEDs 530 can emit a light in different colors and/or at different brightness depending on the activated/deactivated state.

According to still another embodiment of the present invention, a plural number of LEDs 530 are located beneath each of the touch sensors 520. In this configuration, the LED driving unit 570 decides whether to supply current to all or part of the LEDs 530 beneath each touch sensor 520 depending on the activated/deactivated state of the touch sensor 520. Accordingly, touch sensors 520 in the activated state can be visually distinguished from those in the deactivated state.

Meanwhile, the configuration of FIG. 5 including the LED driving unit 570 and a plurality of LEDs 530 can be replaced with a similar configuration that performs a virtually identical function. Naming this functional block that visually displays the activated/deactivated state of each of the touch sensors 520 to a user an optical signal generation unit, the optical signal generation unit may selectively emit a light only with respect to touch sensors 520 in the activated state, or may be configured to generate different types of optical signals with respect to touch sensors in the activated state and those in the deactivated state. Aforementioned different types of optical signals may indicate lights emitted in different colors or at different brightness, or various types of light combinations, such as a continuously emitting light and a blinking light, a blinking light and a turned-off light, and a light emitting with respect to entire surface of the touch sensors 520 and a light emitting with respect to an edge portion of the touch sensors 520.

Referring back to FIG. 5, the touch sensor driving unit 550 is connected to each of the touch sensors 520 via a sensor control bus 521. The touch sensors 520 require driving signals to detect a user's touch.

The touch sensing signal receiving unit 560 is connected to the touch sensors 520 via a sensor signal receiving bus 522, and receives touch sensing signals which are generated or changed by a user's touch.

A control signal generation unit 590 generates a control signal to control a digital device based on the touch sensing signals received in the touch sensing signal receiving unit 560. Even when identical touch sensing signal is received from an identical touch sensor 520, there may be needed to generate a different control signal depending on the operation mode. Therefore, the control signal generation unit 590 generates the control signal by referring to information about the operation mode of the digital device.

According to an embodiment of the present invention, when the touch sensing signal receiving unit 560 detects a user's touch from a specific touch sensor 520, the LED driving unit 570 emits a light which is different from that of a normal condition by using an LED 530 located beneath the specific touch sensor 520, thereby giving the user a feedback for the user's touch.

Specifically, the LED driving unit 570 may control an LED 530 located beneath a touch sensor 520 in an activated state to continuously emit a light in a normal condition, and control it to blink for a preset number of times when the user's touch is detected at the specific touch sensor 520. In this configuration, the user may be informed that the his/her touch has been correctly detected.

This additional feature of the present embodiment helps to solve a problem that most touch sensors have, i.e., nonexistence of a tactile and/or audio feedback which is generally provided by mechanical buttons by providing a visual feedback.

According to an embodiment of the present invention, the touch sensing signal receiving unit 560 and the LED driving unit 570 may be integrated into a single IC chip. The touch sensor driving unit 550 also may be integrated in a single chip, along with the touch sensing signal receiving unit 560 and the LED driving unit 570. As described above, a single chip type solution capable of integrally controlling the touch sensors 520 and the LEDs 530 may be provided by integrating together related elements. Further, by providing core elements in a single chip type solution, the user input apparatus according to the present invention may be miniaturized and highly-integrated and, in turn, the digital device incorporating the user input apparatus may also be miniaturized.

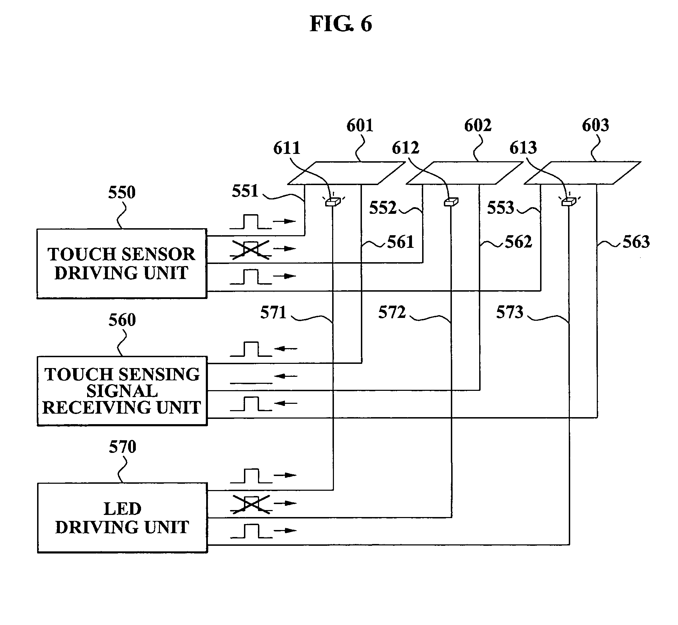

FIG. 6 illustrates an embodiment of the present invention. An LED driving unit 570 supplies driving signals only to LEDs 611 and 613 located beneath touch sensors 601 and 603 in the activated state, while not supplying a driving signal to an LED 612 located beneath a touch sensor 602 in the deactivated state. However, the LED driving unit 570 may control LEDs 611, 612 and 613 in various kinds of manner, such as determining whether to supply driving signal to each of the LEDs 611, 612, and 613 according to the activated/deactivated state of each of the touch sensors 601, 602, and 603, or controlling a period of driving signal supply or a driving signal level. Through such a variety of control manners, LED driving unit 570 may visually display activation state of each of the touch sensors 601, 602, and 603 to the user.

Also, in the embodiment described with reference to FIG. 6, the user's touch is restrictedly detected by the touch sensors 601 and 603 which are in the activated state for providing a user input convenience. The two embodiments are different in their specific implementation.

In the embodiment of FIG. 6, the touch sensor driving unit 550 transmits driving signals selectively to the touch sensors 601 and 603 which are in the activated state via paths 551 and 553, and the touch sensing signal receiving unit 560 receives touch sensing signals from all touch sensors 601, 602 and 603, via paths 561, 562 and 563 connecting to each of the touch sensors 601, 602 and 603.

The above-described configuration is applicable to the touch sensors 601, 602 and 603 which require driving signals in order to detect a user's touch. Since the driving signal is not supplied to the touch sensor 602 which is in the deactivated state, the touch sensing signal is not generated therefrom or a level of the touch sensing signal is not changed even when the user's touch has been applied.

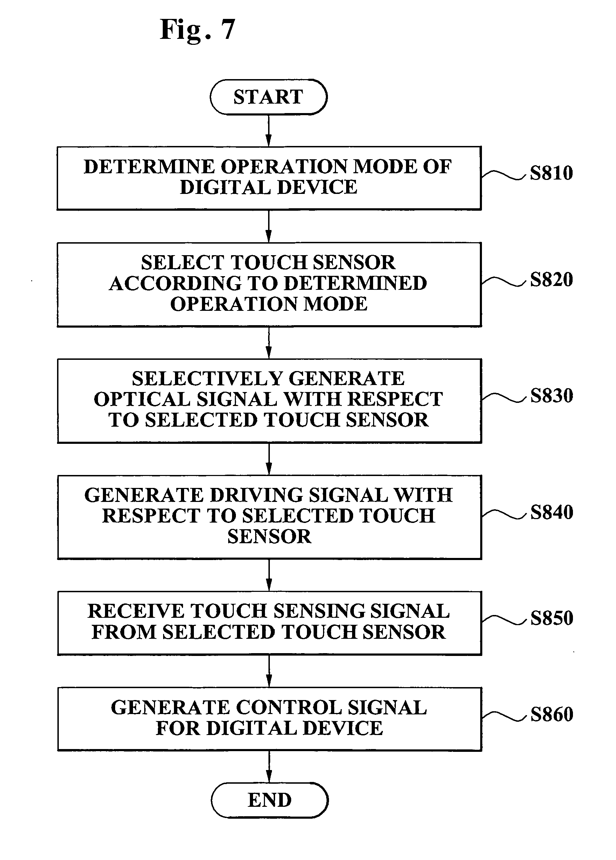

FIG. 7 is a flowchart illustrating a method of controlling a digital device using the user input apparatus described so far.

In operation S810, an operation mode of the digital device is determined. The operation mode may be changed, e.g., when mechanical operations are performed, such as when a user opens a cover covering a plurality of touch sensors or flips open or unfolds a flip-type or a folder type device, or when a user moves a slide of the digital device, when a user switches the operation mode via menu manipulation, when an application converting the operation mode in a predetermined order is performed, and the like.

Once the operation mode is determined in operation S810, touch sensors are selected from the plurality of touch sensors according to the determined operation mode. Different touch sensors may be selected in different operation modes in operation S820.

Optical signals are selectively generated with respect to the selected touch sensors in operation S830, and driving signals are generated and supplied to the selected touch sensors in operation S840. In this manner, activated/deactivated states of the touch sensors which are selectively used according to an operation mode are individually visualized and driving signals are transmitted only to those touch sensors, thereby effectively activating a part of entire touch sensors used in that operation mode.

In operation S840, a case where driving signals are supplied to the selected touch sensors is illustrated in FIG 7.

In operation S850, the touch sensing signal is received from the selected touch sensor of operation S820, and thereby a user's touch on the touch sensor in the activated state is detected.

In operation S80, a control signal to control the digital device is generated based on the received touch sensing signal.

In the method of controlling the digital device according to the present invention, different sets of touch sensors are used depending on the operation modes by means of the above-described operations, effectively delivering information about the selected touch sensors to the user.

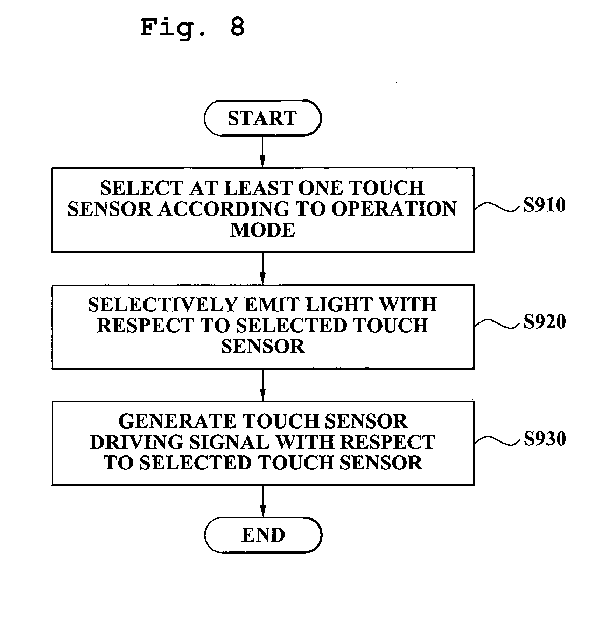

FIG. 8 is a flowchart illustrating a method of receiving a user's input according to embodiments of the present invention. Information about user input is received in response to the user's touch and used to control a digital device. The digital device is operated in various operation modes, and different sets of touch sensors may be used for the user input depending on the operation modes.

According to the embodiment described with reference to FIG. 8, a part of the plurality of touch sensors, i.e., at least one touch sensor is selected depending on the operation mode of the digital device (S910). The selected touch sensor is a sensor used for receiving user input in the corresponding operation mode.

In operation S920, a light is selectively emitted with respect to the selected touch sensor, thereby indicating that input is available with the selected touch sensor. Reporting such an information on the selected touch sensor may be implemented in the form of continuously emitting a light, blinking a light, or emitting lights in different colors and/or at different brightness with respect to a selected and a non-selected touch sensor.

In operation S930, a driving signal is selectively generated and supplied to the selected touch sensor, thereby allowing the user input to be received only via the touch sensor selected in a corresponding operation mode.

Heretofore, the method of receiving a user's input and the method of controlling a digital device according to the present invention are described by referring to FIGS. 7 and 8. Details of the user input apparatus described with reference to FIGS. 3 through 6 are applicable to the embodiments in FIGS. 7 and 8, thus more detailed description will be skipped here.

For the reference, operations in FIGS. 7 and 8 are not necessarily described in their performing orders. For example, operations S830 and S840 of FIG. 7, and operations S920 and S930 of FIG. 8, may be performed simultaneously or in inverse order.

The method of receiving a user's input and the method of controlling a digital device according to the above-described embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks and magnetic tapes; optical media such as CD ROM disks and DVDs; magneto-optical media such as optical disks; and hardware devices that are specially designed to store and execute program instructions, such as read-only memory (ROM), random access memory (RAM), flash memory, and the like.

The media may also be a transmission media such as optical or metallic lines, wave guides, and the like, delivering therethrough a carrier wave transmitting signals specifying the program instructions, data structures, and the like. Examples of program instructions include both machine codes, such as produced by a compiler, and files containing higher level codes that may be executed by the computer using an interpreter. The described hardware devices may be configured to act as one or more software modules in order to perform the operations of the above-described embodiments of the present invention.

Although a few embodiments of the present invention have been shown and described, the present invention is not limited to the described embodiments.

Instead, it would be appreciated by those skilled in the art that changes may be made to these embodiments without departing from the invention, the scope of which is defined by the claims and their equivalents.

According to embodiments of the invention, it is possible to provide a user with a more intuitive user interface which can control a digital device being operated in various operation modes.

Further, embodiments of the present invention prevents a user's unnecessary input attempts by selectively generating optical signals with respect to touch sensors used in a specific operation mode. Accordingly, it is possible to prevent a user's confusion that may occur when the operation mode switches, and to enable a faster input.

Further, according to embodiments of the present invention it is possible to provide a user input apparatus capable of improving a user's convenience for manipulation since touch sensors that are not in use in a specific operation mode are appropriately hid from a user's view, minimizing a user's aversion to a complex user interface.

Further, according to embodiments of the present invention, it is possible to improve effectiveness in sensing a user's touch from the touch sensors in an activated state by selectively applying touch sensor driving signals to touch sensors in an activated state.

Further, according to embodiments of the present invention, it is possible to effectively provide a visual feedback for the user's touch since, when the user's touch is detected at a specific touch sensor which is in the activated state, a different type of optical signal is generated with respect to that touch sensor.

## Claims

1. A user input apparatus (311) for controlling a digital device (310) by sensing a user's touch, comprising:
a plurality of touch sensors (520), each of which is arranged to detect a user's touch;
a state control unit (580) arranged to determine an active or deactivated state for each of the touch sensors (520) according to an operation mode of the digital device (310) which is determined based on a user's input;
an optical signal generation unit (570) arranged to generate an optical signal that displays the active or deactivated state of each of the touch sensors (520); and
a touch sensing signal receiving unit (560) arranged to receive the touch sensing signals, and
**characterised by** a touch sensor driving unit (550) arranged to generate a sensor driving signal that drives the touch sensors (520) that are in the active state, so that when a touch sensor detects a user's touch, a touch sensing signal is generated from the touch sensor (520) if it is in the active state and no touch sensing signal is generated from the touch sensor (520) if it is in the deactivated state.

2. The apparatus of claim 1, wherein the optical signal generation unit (570) includes:
a light emitting member located adjacent to the touch sensors (520) and selectively emitting a light with respect to each touch sensor (520),
wherein the light emitting member emits the light with respect to the touch sensor (520) in the active state.

3. The apparatus of claim 1, wherein the optical signal generation unit includes:
a light emitting member (530) located adjacent to the touch sensors (520) and selectively emitting a light with respect to each touch sensor (520),
wherein the light emitting member (530) blocks the light with respect to a touch sensor (520) in the deactivated state.

4. The apparatus of claim 1, wherein the optical signal generation unit includes:
a light emitting member (530) located adjacent to the touch sensors (520) and selectively emitting a light with respect to each touch sensor (520),
wherein the light emitting member (530) emits the light in different colors or at different brightness with respect to the touch sensor (520) in the activate state and the touch sensor (520) in the deactivated state.

5. The apparatus of any one of claims 2 through 4, wherein the light emitting member (530) includes:
a plurality of light emitting diodes (530) located beneath the touch sensors (520); and
a light emitting diode driver (570) that applies driving signals to the light emitting diodes (530).

6. The apparatus of any one of claims 2 through 4, wherein the light emitting member (530) blinks the light.

7. The apparatus of claim 1, wherein the optical signal generation unit (570) generates a second optical signal that displays a touch status of the touch sensor (520) in the active state when the touch sensing signal is received from the touch sensor (520) in the active state.

8. The apparatus of claim 1, wherein the optical signal generation unit includes:
a light emitting member (530) located adjacent to the touch sensors and selectively emitting a light with respect to each touch sensor,
wherein the light emitting member (530) emits the light blinking as much as a predetermined number of times with respect to the touch sensor (520) in the active state when the touch sensing signal is received from the touch sensor (520) in the active state.

9. The apparatus of claim 1, wherein the touch sensor driving unit (550) periodically generates the sensor driving signal.

10. The apparatus of claim 1, further comprising a control signal generation unit (590) generating a control signal for controlling the digital device based on the touch sensing signal.

11. The apparatus of claim 1, wherein the optical signal generation unit (570) and the touch sensing signal receiving unit (560) are integrated into a single chip.

12. A method for controlling a digital device (310) using a plurality of touch sensors (520) arranged to detect a user's touch, the method comprising:
detecting a user's touch via a plurality of touch sensors (520):
determining an operation mode of the digital device (211) based on a user's input;
determining an active or deactivated state for each of the touch sensors (520) according to the operation mode of the digital device (310);
generating an optical signal to display the active or deactivated state of each of the touch sensors (520); and
receiving touch sensing signals from the touch sensors (520), and
**characterised by** applying a sensor driving signal to those touch sensors (520) that are in the active state and not applying a sensor driving signal to those touch sensors (520) that are in the deactivated state.

13. The method of claim 12, wherein the digital device (311) is operated in a plurality of operation modes, and different combination of touch sensors (520) are selected for different operation modes.

14. The method of claim 12, wherein the optical signal includes a light which is emitted by one or more light emitting devices (530) located beneath the touch sensors (520).

15. The method of claim 12, further comprising:
generating a second optical signal with respect to a touch sensor (520) that generates the touch sensing signal.

## Patentansprüche

1. Anwendereingabevorrichtung (311) zum Steuern einer digitalen Einrichtung (310) durch Erfassen einer Berührung des Anwenders, die Folgendes umfasst:
mehrere Berührungssensoren (520), von denen jeder dafür ausgelegt ist, eine Berührung des Anwenders zu detektieren;
eine Zustandssteuereinheit (580), die dafür ausgelegt ist, einen aktiven oder deaktivierten Zustand für jeden der Berührungssensoren (520) gemäß einem Betriebsmodus der digitalen Einrichtung (310), der auf der Grundlage der Eingabe des Anwenders bestimmt ist, zu bestimmen;
eine Einheit (570) zum Erzeugen optischer Signale, die dafür ausgelegt ist, ein optisches Signal zu erzeugen, das den aktiven oder deaktivierten Zustand von jedem der Berührungssensoren (520) anzeigt, und
eine Einheit (560) zum Empfangen der Berührungserfassungssignale, die dafür ausgelegt ist, die Berührungserfassungssignale zu empfangen, und
**gekennzeichnet durch** eine Einheit (550) zum Ansteuern der Berührungssensoren, die dafür ausgelegt ist, ein Sensoransteuerungssignal zu erzeugen, das die Berührungssensoren (520) ansteuert, die in dem aktiven Zustand sind, so dass dann, wenn ein Berührungssensor eine Berührung des Anwenders detektiert, ein Berührungserfassungssignal von dem Berührungssensor (520) erzeugt wird, wenn er in dem aktiven Zustand ist, und kein Berührungserfassungssignal von dem Berührungssensor (520) erzeugt wird, wenn er in dem deaktivierten Zustand ist.

2. Vorrichtung nach Anspruch 1, wobei die Einheit (570) zum Erzeugen der optischen Signale Folgendes aufweist:
ein lichtemittierendes Element, das benachbart zu den Berührungssensoren (520) liegt und selektiv in Bezug auf jeden Berührungssensor (520) Licht emittiert,
wobei das lichtemittierende Element das Licht in Bezug auf den Berührungssensor (520) in dem aktiven Zustand emittiert.

3. Vorrichtung nach Anspruch 1, wobei die Einheit zum Erzeugen der optischen Signale Folgendes aufweist:
ein lichtemittierendes Element (530), das benachbart zu den Berührungssensoren (520) liegt und selektiv in Bezug auf jeden Berührungssensor (520) ein Licht emittiert,
wobei das lichtemittierende Element (530) das Licht in Bezug auf einen Berührungssensor (520) in dem deaktivierten Zustand blockiert.

4. Vorrichtung nach Anspruch 1, wobei die Einheit zum Erzeugen der optischen Signale Folgendes aufweist:
ein lichtemittierendes Element (530), das benachbart zu den Berührungssensoren (520) liegt und selektiv in Bezug auf jeden Berührungssensor (520) Licht emittiert,
wobei das lichtemittierende Element (530) das Licht in Bezug auf den Berührungssensor (520) in dem aktiven Zustand und dem Berührungssensor (520) in dem deaktivierten Zustand in verschiedenen Farben oder mit verschiedenen Helligkeiten emittiert.

5. Vorrichtung nach einem der Ansprüche 2 bis 4, wobei das lichtemittierende Element (530) Folgendes aufweist:
mehrere Leuchtdioden (530), die unter den Berührungssensoren (520) liegen, und
einen Leuchtdiodentreiber (570), der Ansteuerungssignale an die Leuchtdioden (530) anlegt.

6. Vorrichtung nach einem der Ansprüche 2 bis 4, wobei das lichtemittierende Element (530) das Licht blinken lässt.

7. Vorrichtung nach Anspruch 1, wobei die Einheit (570) zum Erzeugen der optischen Signale ein zweites optisches Signal erzeugt, das einen Berührungszustand des Berührungssensors (520) in dem aktiven Zustand anzeigt, wenn das Berührungserfassungssignal von dem Berührungssensor (520) in dem aktiven Zustand empfangen wird.

8. Vorrichtung nach Anspruch 1, wobei die Einheit zum Erzeugen der optischen Signale Folgendes aufweist:
ein lichtemittierendes Element (530), das benachbart zu den Berührungssensoren liegt und selektiv in Bezug auf jeden Berührungssensor Licht emittiert,
wobei das lichtemittierende Element (530) das Licht in Bezug auf den Berührungssensor (520) in dem aktiven Zustand blinkend in einer vorgegebenen Anzahl emittiert, wenn das Berührungserfassungssignal von dem Berührungssensor (520) in dem aktiven Zustand empfangen wird.

9. Vorrichtung nach Anspruch 1, wobei die Einheit (550) zum Ansteuern der Berührungssensoren das Sensoransteuerungssignal periodisch erzeugt.

10. Vorrichtung nach Anspruch 1, die ferner Folgendes umfasst:
eine Einheit (590) zum Erzeugen von Steuersignalen, die ein Steuersignal zum Steuern der digitalen Einrichtung auf der Grundlage des Berührungserfassungssignals erzeugt.

11. Vorrichtung nach Anspruch 1, wobei die Einheit (570) zum Erzeugen der optischen Signale und die Einheit (560) zum Empfangen der Berührungserfassungssignale in einem einzigen Chip integriert sind.

12. Verfahren zum Steuern einer digitalen Einrichtung (310) unter Verwendung mehrerer Berührungssensoren (520), die dafür ausgelegt sind, eine Berührung des Anwenders zu detektieren, wobei das Verfahren Folgendes umfasst:
Detektieren einer Berührung des Anwenders über mehrere Berührungssensoren (520);
Bestimmen eines Betriebsmodus der digitalen Einrichtung (211) auf der Grundlage der Eingabe des Anwenders;
Bestimmen eines aktiven oder deaktivierten Zustands für jeden der Berührungssensoren (520) gemäß dem Betriebsmodus der digitalen Einrichtung (310);
Erzeugen eines optischen Signals, um den aktiven oder den deaktivierten Zustand von jedem der Berührungssensoren (520) anzuzeigen, und
Empfangen von Berührungserfassungssignalen von den Berührungssensoren (520) und
**gekennzeichnet durch** Anlegen eines Sensoransteuerungssignals an diejenigen Berührungssensoren (520), die in dem aktiven Zustand sind, und Nicht-Anlegen eines Sensoransteuerungssignals an diejenigen Berührungssensoren (520), die in dem deaktivierten Zustand sind.

13. Verfahren nach Anspruch 12, wobei die digitale Einrichtung (311) in mehreren Betriebsmodi betrieben wird und verschiedene Kombinationen der Berührungssensoren (520) für verschiedene Betriebsmodi ausgewählt sind.

14. Verfahren nach Anspruch 12, wobei das optische Signal ein Licht aufweist, das durch eine oder mehrere lichtemittierende Einrichtungen (530), die unter den Berührungssensoren (520) liegen, emittiert wird.

15. Verfahren nach Anspruch 12, das ferner Folgendes umfasst:
Erzeugen eines zweiten optischen Signals in Bezug auf einen Berührungssensor (520), der das Berührungserfassungssignal erzeugt.

## Revendications

1. Appareil d'entrée utilisateur (311) pour commander un dispositif numérique (310) en détectant un toucher de l'utilisateur, comprenant :
une pluralité de capteurs tactiles (520), dont chacun est agencé pour détecter un toucher de l'utilisateur ;
une unité de commande d'état (580) agencée pour déterminer un état actif ou désactivé pour chacun des capteurs tactiles (520) en fonction d'un mode de fonctionnement du dispositif numérique (310) qui est déterminé sur la base d'une entrée utilisateur ;
une unité de génération de signal optique (570) agencée pour générer un signal optique qui affiche l'état actif ou désactivé de chacun des capteurs tactiles (520) ; et
une unité de réception de signal tactile (560) agencée pour recevoir les signaux de détection tactile, et
**caractérisé par** une unité de pilotage de capteur tactile (550) agencée pour générer un signal de pilotage de capteur qui pilote les capteurs tactiles (520) qui sont à l'état actif, de sorte que lorsqu'un capteur tactile détecte un toucher de l'utilisateur, un signal de détection tactile est généré à partir du capteur tactile (520) s'il est à l'état actif et aucun signal de détection tactile n'est généré à partir du capteur tactile (520) s'il est à l'état désactivé.

2. Appareil selon la revendication 1, dans lequel l'unité de génération de signal optique (570) inclut :
un organe émetteur de lumière positionné au voisinage des capteurs tactiles (520) et émettant sélectivement une lumière par rapport à chaque capteur tactile (520),
dans lequel l'organe émetteur de lumière émet la lumière par rapport au capteur tactile (520) à l'état actif.

3. Appareil selon la revendication 1, dans lequel l'unité de génération de signal optique inclut :
un organe émetteur de lumière (530) positionné au voisinage des capteurs tactiles (520) et émettant sélectivement une lumière par rapport à chaque capteur tactile (520),
dans lequel l'organe émetteur de lumière (530) bloque la lumière par rapport à un capteur tactile (520) à l'état désactivé.

4. Appareil selon la revendication 1, dans lequel l'unité de génération de signal optique inclut :
un organe émetteur de lumière (530) positionné au voisinage des capteurs tactiles (520) et émettant sélectivement une lumière par rapport à chaque capteur tactile (520),
dans lequel l'organe émetteur de lumière (530) émet la lumière dans différentes couleurs ou à différentes luminosités par rapport au capteur tactile (520) à l'état actif et au capteur tactile (520) à l'état désactivé.

5. Appareil selon l'une quelconque des revendications 2 à 4, dans lequel l'organe émetteur de lumière (530) inclut :
une pluralité de diodes électroluminescentes (530) positionnées sous les capteurs tactiles (520) ; et
un pilote de diode électroluminescente (570) qui applique des signaux de pilotage aux diodes électroluminescentes (530).

6. Appareil selon l'une quelconque des revendications 2 à 4, dans lequel l'organe émetteur de lumière (530) fait clignoter la lumière.

7. Appareil selon la revendication 1, dans lequel l'unité de génération de signal optique (570) génère un second signal optique qui affiche un état tactile du capteur tactile (520) à l'état actif lorsque le signal de détection tactile est reçu du capteur tactile (520) à l'état actif.

8. Appareil selon la revendication 1, dans lequel l'unité de génération de signal optique inclut :
un organe émetteur de lumière (530) positionné au voisinage des capteurs tactiles et émettant sélectivement une lumière par rapport à chaque capteur tactile,
dans lequel l'organe émetteur de lumière (530) émet la lumière clignotant autant qu'un nombre de fois prédéterminé par rapport au capteur tactile (520) à l'état actif lorsque le signal de détection tactile est reçu du capteur tactile (520) à l'état actif.

9. Appareil selon la revendication 1, dans lequel l'unité de pilotage de capteur tactile (550) génère périodiquement le signal de pilotage de capteur.

10. Appareil selon la revendication 1, comprenant en outre
une unité de génération de signal de commande (590) générant un signal de commande pour commander le dispositif numérique sur la base du signal de détection tactile.

11. Appareil selon la revendication 1, dans lequel l'unité de génération de signal optique (570) et l'unité de réception de signal de détection tactile (560) sont intégrées dans une seule puce.

12. Procédé pour commander un dispositif numérique (310) utilisant une pluralité de capteurs tactiles (520) agencés pour détecter un toucher de l'utilisateur, le procédé comprenant :
détecter un toucher de l'utilisateur via une pluralité de capteurs tactiles (520) ;
déterminer un mode de fonctionnement du dispositif numérique (211) sur la base d'une entrée utilisateur ;
déterminer un état actif ou désactivé pour chacun des capteurs tactiles (520) en fonction du mode de fonctionnement du dispositif numérique (310) ;
générer un signal optique pour afficher l'état actif ou désactivé de chacun des capteurs tactiles (520) ; et
recevoir des signaux de détection tactile provenant des capteurs tactiles (520), et
**caractérisé par** l'application d'un signal de pilotage de capteur aux capteurs tactiles (520) qui sont à l'état actif et la non-application d'un signal de pilotage de capteur aux capteurs tactiles (520) qui sont à l'état désactivé.

13. Procédé selon la revendication 12, dans lequel le dispositif numérique (311) fonctionne dans une pluralité de modes de fonctionnement, et différente combinaisons de capteurs tactiles (520) sont choisies pour différents modes de fonctionnement.

14. Procédé selon la revendication 12, dans lequel le signal optique inclut une lumière qui est émise par un ou plusieurs dispositifs émetteurs de lumière (530) situés sous les capteurs tactiles (520).

15. Procédé selon la revendication 12, comprenant en outre :
générer un second signal optique par rapport à un capteur tactile (520) qui génère le signal de détection tactile.
